# EUROPEAN PATENT APPLICATION

(11) **EP 2 713 106 A1**
(43) Date of publication of application: **02.04.2014**
(21) Application number: 13186497.7
(22) Date of filing: 27.09.2013
(51) Int. Cl.: F23R 3/00

(54) **System and method for swirl flow generation**

(30) Priority: 01.10.2012 US 201213633022
(71) Applicant: General Electric Company, Schenectady, New York 12345 (US)
(72) Inventor: Kodukulla, Sridhar Venkat, 560066 Bangalore, Karnataka (IN); Bathina, Mahesh, 560066 Bangalore, Karnataka (IN); Gopalakrishna, Sandeep, 560066 Bangalore, Karnataka (IN)
(74) Representative: Cleary, Fidelma

(57) **Abstract**

A system includes a turbine combustor 14 containing a first wall portion 48 disposed about a combustion zone, a second wall portion 50 disposed about the first wall portion, and a plurality of vanes 52 disposed within an annulus 46 between the first and second wall portions. The plurality of vanes is configured to swirl air flowing within the annulus.

## Description

### BACKGROUND OF THE INVENTION

The subject matter disclosed herein relates to gas turbine engines, and, more particularly, to swirl flow generation in a turbine combustor.

A gas turbine engine combusts a fuel-air mixture in a combustor, and then drives one or more turbines with the resulting hot and pressurized combustion gases. Typically, combustion occurs within a combustion chamber formed by a combustion liner disposed within a flow sleeve. As a result, the combustion liner is heated by the combustion reaction. The thermal gradients caused by combustion may result in an uneven thermal profile of the combustion liner. In order to reduce thermal failure of the combustion liner, the liner may be cooled using air. While this may provide general cooling effects, the impingement cooling may not result in an even thermal profile of the combustion liner. Uneven cooling may result in hot streaks and a temperature gradient within the component material.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a turbine combustor containing a first wall portion disposed about a combustion zone, a second wall portion disposed about the first wall portion, and a plurality of vanes disposed within an annulus between the first and second wall portions. The plurality of vanes is configured to swirl air flowing within the annulus.

In a second embodiment, a system includes a plurality of vanes disposed within an annulus between a liner and a flow sleeve of a turbine combustor. The plurality of vanes is disposed about a circumference of the annulus, and each of the plurality of vanes is disposed at a respective angle relative to a longitudinal axis of the turbine combustor.

In a third embodiment, a method includes disposing a plurality of vanes within an annulus between a liner and a flow sleeve of a turbine combustor. Each of the plurality of vanes is disposed at an angle respective to a longitudinal axis of the turbine combustor. The method continues by directing an air flow within the annulus and across the plurality of vanes to generate a swirling air flow within the annulus.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic of an embodiment of a gas turbine system with a plurality of turbine combustors;
FIG. 2 is a cross-sectional side view schematic of an embodiment of one of the turbine combustors of FIG. 1 including a plurality of vanes for controlling combustor cooling;
FIG. 3 is a partial view of an embodiment of a turbine combustor, taken within line 3-3 of FIG. 2, illustrating a plurality of curved vanes disposed on the combustion liner;
FIG. 4 is a partial view of an embodiment of a turbine combustor, taken within line 3-3 of FIG. 2, illustrating a plurality of straight vanes disposed on the combustion liner; and
FIG. 5 is a cross-sectional view of an embodiment of a turbine combustor illustrating a plurality of vanes disposed on the flow sleeve.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments are directed toward a plurality of vanes located in an annulus between a flow sleeve and a combustion liner of a turbine combustor. More specifically, the disclosed embodiments may include a plurality of vanes configured to swirl airflow within the annulus to facilitate cooling of the combustion liner in a controlled manner (e.g., more uniform cooling). For example, in certain embodiments, the vanes may be attached to the combustion liner of the turbine combustor and may have a radius of curvature designed to generate swirling of the airflow within the annulus. In such an embodiment, the vanes may have the same radius of curvature, or the vanes may have different radii of curvature among them. In other embodiments, the vanes affixed to the combustion liner may have a linear or aerodynamic profile and may be disposed at a respective angle relative to an axis. The vanes may share a similar respective angle relative to a central axis of the turbine combustor, or they may be arranged at varying respective angles relative to a central axis of the turbine combustor in order to change the swirling properties applied to the airflow. For example, vanes arranged with different respective angles may provide more aggressive cooling to certain locations (e.g., locations of heat streaks) on the combustion liner. In different embodiments, the vanes may be attached to the flow sleeve. Furthermore, in certain embodiments, there may be an arrangement of between three and twenty vanes disposed within the annulus. The vanes may be attached at a single axial location, or they may be attached in a staggered formation. The particular arrangement of the vanes may be dependent upon the desired flow properties of the air downstream of the vane section and/or the hot gases flow path inside the combustor. Additionally, the vanes may be equidistantly spaced. However, depending on the desired flow conditions, the vanes may be spaced non-uniformly as well.

As discussed in detail below, the vanes may be configured to swirl airflow within the annulus between the flow sleeve and combustion liner of a turbine combustor. Swirling the air will increase the air's residence time in the annulus and may improve the efficiency of convective cooling of the combustion liner with compressor discharge air. Utilizing swirling patterns of air may also provide preferential cooling to hot zones of the combustion liner. By preferentially cooling the hot zones, induced thermal stresses within the turbine combustor may be mitigated, and the reliability of the structure may be improved. Preferential cooling may also enable the combustion reaction to occur at higher temperatures. Moreover, by preferentially cooling hot zones, the temperature profile of the combustion liner may become more linear, enabling an increase in the combustion reaction firing temperature within the liner. As will be appreciated, the combustion reaction may be more efficient at higher firing temperatures, resulting in lower costs of operation and lower emissions.

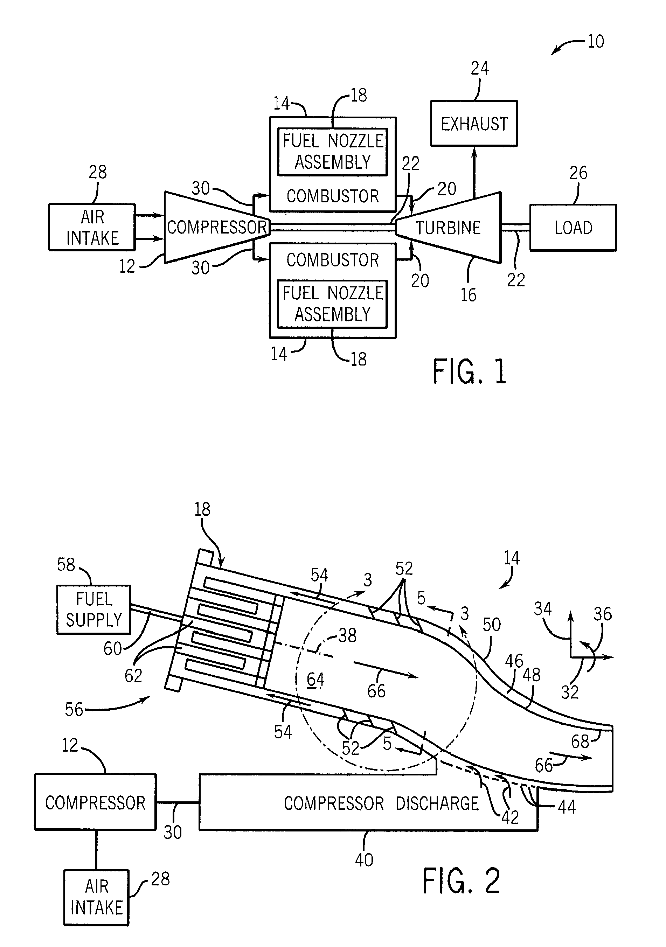

Turning to the drawings, FIG. 1 illustrates a block diagram of an embodiment of a gas turbine system 10. The system 10 includes a compressor 12, turbine combustors 14, and a turbine 16. The turbine combustors 14 each include a fuel nozzle assembly 18. The fuel nozzle assembly 18 of each turbine combustor 14 includes fuel nozzles which route a liquid fuel and/or gas fuel, such as natural gas or syngas, into the turbine combustors 14. As described in detail below, each turbine combustor 14 may include a combustion zone at least partially defined by a combustion liner disposed within a flow sleeve. An annulus is formed between the combustion liner and the flow sleeve. Furthermore, the annulus may contain a plurality of vanes intended to swirl air discharged from the compressor 12 prior to the air reaching the fuel nozzle assembly 18.

The turbine combustors 14 ignite and combust an air-fuel mixture, and then pass hot pressurized combustion gasses 20 (e.g., exhaust) into the turbine 16. Turbine blades are coupled to a shaft 22, which is also coupled to several other components throughout the turbine system 10. As the combustion gases 20 pass through the turbine blades in the turbine 16, the turbine 16 is driven into rotation, which causes the shaft 22 to rotate. Eventually, the combustion gases 20 exit the turbine system 10 via an exhaust outlet 24. Further, the shaft 22 may be coupled to a load 26, which is powered via rotation of the shaft 22. For example, the load 26 may be any suitable device that may generate power via the rotational output of the turbine system 10, such as an electrical generator, a propeller of an airplane, and so forth.

Compressor blades are included as components of the compressor 12. The blades within the compressor 12 are coupled to the shaft 22, and will rotate as the shaft 22 is driven to rotate by the turbine 16, as described above. The rotation of the blades within the compressor 12 compresses air from an air intake 28 into pressurized air 30. The pressurized air 30 is then fed into the fuel nozzle assembly 18 (e.g., fuel nozzles) of the turbine combustors 14. The fuel nozzles of the fuel nozzle assemblies 18 mix the pressurized air 30 and fuel to produce a suitable mixture ratio for combustion (e.g., a combustion that causes the fuel to more completely burn). As discussed below, in certain embodiments, the pressurized air 30 may also flow past vanes disposed within the combustor 14 prior to reaching the fuel nozzle assembly 18. The vanes will create a swirling effect with the pressurized air 30. The pressurized air 30 will then travel in a swirling motion and provide cooling to internal components of the combustor 14.

FIG. 2 is a cross-sectional schematic of an embodiment of one of the turbine combustors 14, illustrating the path the pressurized air 30 follows once it leaves the compressor 12. For purposes of discussion, reference may be made to an axial direction 32, a radial direction 34 away from the axial direction 32, and a circumferential direction 36 about the axial direction 32. As shown in the illustrated embodiment, the pressurized air 30 is received by a compressor discharge case 40 that is operatively coupled to the turbine combustor 14. As indicated by arrows 42, the pressurized air 30 flows from the compressor discharge case 40 through impingement holes 44 in the turbine combustor 14. The pressurized air 30 then flows into an annulus 46 formed between a combustion liner 48 (e.g., a first wall that convyes the hot gases to the turbine) and a flow sleeve 50 (e.g., a second wall) of the turbine combustor 14. When flowing through annulus 46, the pressurized air 30 comes into contact with a plurality of vanes 52. In other words, the pressurized air 30 flows past the vanes 52 disposed within the annulus 46. The vanes 52 may then create swirled air 54 with the pressurized air 30. As detailed below, the swirled air 54 travels through annulus 46 in a swirling pattern in the circumferential direction 36 about an axis 38 of the combustor 14. The swirling pattern (e.g., swirled air 54) may increase the air's residence time within the annulus 46 to prolong the cooling effects on the combustion liner 48. As shown, the swirled air 54 travels toward a head end 56 of the combustor 14 where the fuel nozzle assembly 18 is located. Also located at the head end 56 of the turbine combustor 14 are a fuel supply 58, which delivers fuel 60, and fuel nozzles 62, which receive the fuel 60. The fuel nozzles 62 mix the fuel 60 with the swirled air 54 to create an air-fuel mixture for combustion. Thereafter, the combination of swirled air 54 and fuel 60 (e.g., the air-fuel mixture) is directed to the combustion chamber 64, where a combustion reaction occurs. The combustion reaction creates combustion products 66 within the combustion chamber 64, which are hot and pressurized. As will be appreciated, the combustion products 66 create hot zones on the combustion liner 48. The combustion products 66 continue to flow downstream within the combustion chamber 64 through a transition piece 68. The combustion products 66 eventually exit the combustor 14 and enter the turbine 16 to drive the turbine blades that rotate the shaft 22.

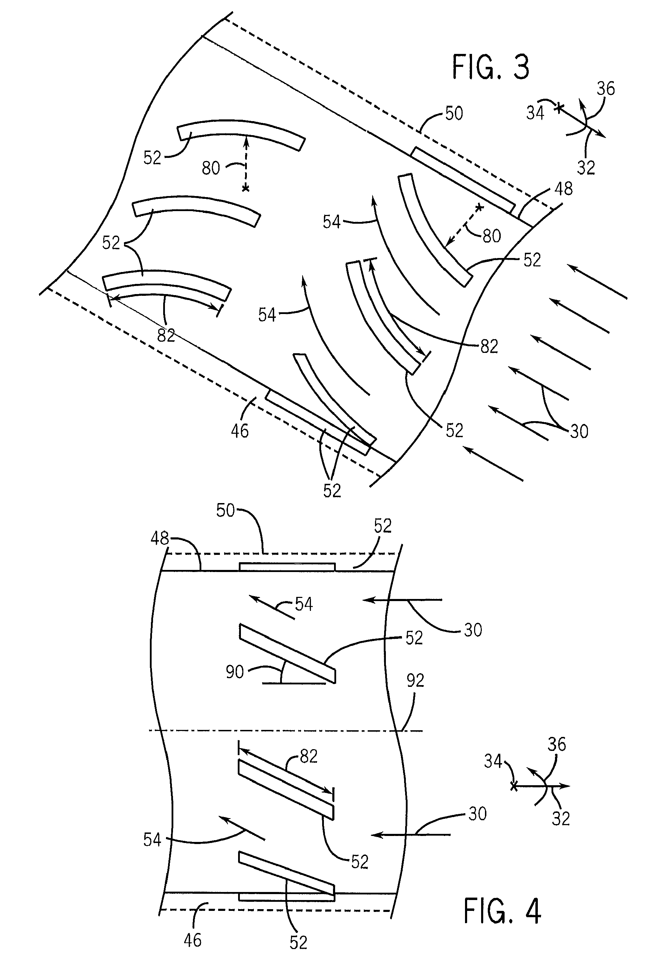

FIG. 3 is a partial view of the turbine combustor 14 illustrating vanes 50 disposed within the annulus 46 formed between the combustion liner 48 and the flow sleeve 50. In the illustrated embodiment, the vanes 52 are coupled to the combustion liner 48 within the annulus 46, such that the vanes 52 are in the airflow path downstream of the impingement cooling holes 44 and upstream of the fuel nozzle assembly 18. Specifically, the vanes 52 are located axially between the head end 56 of the combustor 14 and an outlet of the combustor 14 into the turbine 16. The vanes 52 may be coupled to the combustion liner 48 by welding, brazing, casting, adhesive, bolts, interference fittings, or other fasteners, or a combination thereof. In other embodiments, the vanes 52 may be coupled to the flow sleeve 50 within the annulus 46. As shown in FIG. 3, the vanes 52 have a curved profile, each profile having a radius of curvature 80. In certain embodiments, the vanes 52 may each have the same radius of curvature 80, however, in other embodiments, the vanes 52 may have varying radii of curvature 80 and/or orientation with respect to the axial direction 32 (e.g., to swirl the air 30 in a different direction). As shown, the pressurized air 30 approaches the vanes 52 from the downstream end of the combustor 14. The vanes 52 may further have an aerodynamic cross-section or profile at the downstream end where the vanes 52 first contact the pressurized air 30. This cross-section or profile may stay constant along a length 82 of the vane 52, or it may vary along the length 82 as dictated by design parameters. For example, the length 82 may be between approximately 0.25 and 5 cm. In the illustrated embodiment, the radii of curvature 80 of the vanes 52 may direct the pressurized air 30 in the circumferential direction 36 to generate the swirled air 54. As a result, the swirled air 54 may have a curved flow pattern or profile.

By swirling the air (e.g., the pressurized air 30), the amount of time the swirled air 54 spends within the annulus 46 may be increased, thereby increasing the amount of time for heat transfer to occur between the swirling air 54 and the combustion liner 48 via convection. The increased convective heat transfer may reduce the overall temperature of the combustion liner 48, improving performance and reliability. Additionally, the increased cooling effect may enable the combustor 14 to withstand higher firing temperatures. The swirling action or effect of the swirled air 54 may also be utilized to preferentially cool hot streaks on the combustion liner 48. Further, preferential cooling may result in a more uniform temperature profile throughout the combustion liner 48, thereby reducing thermally induced stresses within the material due to nonuniform heating. Preferential cooling may also reduce the possibility of degradation or failure due to low-cycle fatigue, inelastic deformation, creep relaxation, and other thermo-mechanical failure methods. After flowing through the annulus 46, the swirled air 54 reaches the head end 56 where it is mixed with fuel 60 from the fuel supply 58 in the fuel nozzles 62 and injected into the combustion chamber 64.

FIG. 4 is a partial view of the turbine combustor 14 illustrating vanes 50 disposed within the annulus 46 formed between the combustion liner 48 and the flow sleeve 50. In the illustrated embodiment, the vanes 52 have a linear profile. As mentioned above, the vanes 52 may have an aerodynamic cross-section that contacts the pressurized air 30. Additionally, the cross-section may be uniform along the length 82 of the vane 52 or nonuniform along the length 82 of the vane 52. For example, the thickness of the vane 52 may increase or decrease with the length 82 of the vane 52. The vanes 52 are coupled to the combustion liner 48 at a respective angle 90 relative to a longitudinal axis 92 of the turbine combustor 14. As shown, the longitudinal axis 92 is the centerline of the combustion chamber 64. The respective angle 90 may be between approximately 0°-45°, 5°-40°, 10°-35°, 15°-30°, or 20°-25° with respect to the longitudinal axis 92. The vanes 52 may each be coupled to the combustion liner 48 at similar respective angles 90, or they may be coupled at varying respective angles 90. Moreover, coupling of the vanes 52 to the combustion liner 48 may be achieved using casting, welding, brazing, an adhesive, fasteners, or another method. The pressurized air 30 approaches the vanes 52 from downstream (relative to flow within the combustion chamber 64) and the vanes 52 deflect or direct the flow along the angle imposed by the respective angle 90, thereby directing the airflow in the circumferential direction 36 to produce swirl. The resulting swirled air 54 then travels through the remaining (e.g., upstream relative to the flow within the combustion chamber 64) portion of the annulus 46. The respective angle 90 of each vane 52 may be manipulated to achieve multiple effects from the swirled air 54. For example, the swirl pattern of the swirled air 54 may be aligned with heat streaks generated on the combustion liner 48 from contact with the combustion products 66.

As the angle 90 at which the vanes 52 are disposed within the annulus 46 approaches 45° relative to the longitudinal axis 92, a tighter swirl pattern of the swirled air 54 may be generated. As will be appreciated, a tighter (e.g., stronger) swirl pattern may increase the residence time of the swirled air 54 within the annulus 46. When angle 90 is closer to 0° relative to the longitudinal axis 92, the swirl pattern may be a looser or weaker swirl pattern. The desired residence time may be determined by a number of design criteria, such as, convective heat transfer rate, quantity of convective heat transfer, average combustion liner 48 temperature, maximum combustion liner 48 temperature, pressurized air 30 flow rate, annulus 46 cross-sectional area, among other factors. As mentioned above, the increased residence time of the air (e.g., pressurized air 30 and/or swirled air 54) within the annulus 46 may increase the amount of heat transfer from the combustion liner 48 to the swirled air 54. This may enable a reduction in the overall operating temperature of the combustion liner 48. Reduced operating temperature may improve component durability, improve the inspection interval (i.e., time between inspections), and/or allow an increase in firing temperature within the combustion chamber 64. To enhance the convective cooling affected by the swirled air 54, the vanes 52 may be aligned with the impingement holes 44, one or more swozzles, or a flow (e.g., flow of combustion products 66) within the combustion chamber 64. In certain embodiments, enhanced vane 52 alignments may result in aggressive preferential cooling to achieve uniformity in the thermal profile of the combustion liner 48. Improved thermal uniformity within the component may reduce the possibility of a thermo-mechanical failure or degradation due to thermally induced stresses.

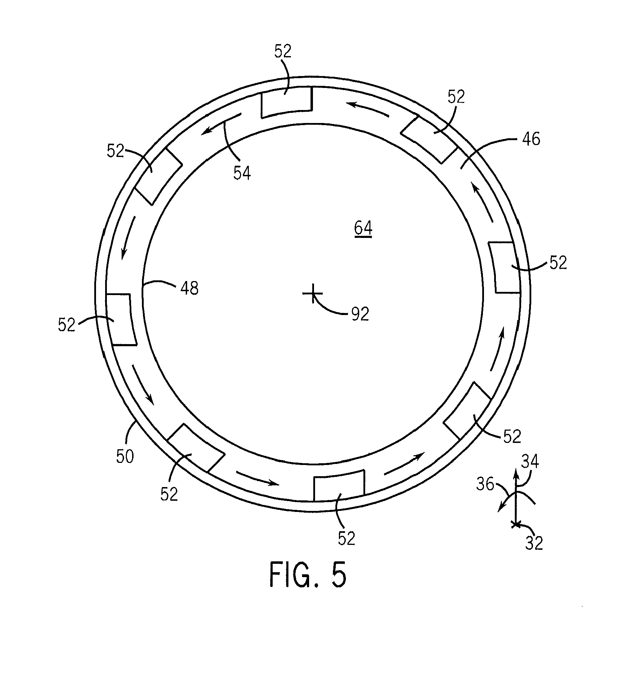

FIG. 5 is a cross-sectional view of an embodiment of the turbine combustor 14 in which the vanes 52 are positioned within the annulus 46 between the flow sleeve 50 and combustion liner 48. In the illustrated embodiment, eight vanes 52 are coupled to the flow sleeve 50. However, in other embodiments, the vanes 52 may be coupled to the combustion liner 48. Furthermore, in certain embodiments, the vanes 52 may be coupled to both the combustion liner 48 and the flow sleeve 50. As mentioned above, any number of vanes 52 (e.g., 1 to 1000) may be placed within the annulus 46 and coupled to either of or both the combustion liner 48 and the flow sleeve 50. However, in certain embodiments, a number of vanes 52 between two and twenty may be suitable. Along the flow sleeve 50, the vanes 52 may be arranged circumferentially 36 about the axis 38 of the combustor 14. For example, the vanes 52 may be equilaterally spaced, as shown in FIG. 5, or otherwise, as determined by system design parameters. Furthermore, the vanes 52 may be placed at a single axial 32 location along the longitudinal axis 92, as shown in FIG. 4, or the vanes 52 may be placed at multiple axial 32 locations. Moreover, as described above, the vanes 52 may have a linear, curved, or other geometrical profile and may have a uniform or nonuniform cross-section along their respective lengths 82. Furthermore, a single combustor 14 may include curved vanes 52 as shown in FIG. 3, linear vanes 52 as shown in FIG. 4, or any combination thereof.

In the described embodiments, a plurality of vanes 52 may be located in an annulus 46 between a flow sleeve 50 and a combustion liner 48 of a turbine combustor 14. More specifically, the plurality of vanes 52 may swirl the airflow (e.g., pressurized air 30) within the annulus 46. For example, the vanes 52 may be attached to the combustion liner 48 of the turbine combustor 14 and may have a radius of curvature 80 designed to generate swirling of the airflow within the annulus 46. In other embodiments, the vanes 52 coupled to the combustion liner 48 may have a linear profile and be disposed at a respective angle 90 relative to an axis 92. Furthermore, in different embodiments, the vanes 52 may be attached to the flow sleeve 50, or the vanes 52 may be attached to both the combustion liner 48 and the flow sleeve 50. The particular arrangement of the vanes 52 may be dependent upon the desired flow properties of the air downstream of the vane 52 section. Swirling the air will increase the air's (e.g., swirled air 54) residence time in the annulus 46 and may improve the efficiency of convective cooling with compressor discharge air (e.g., pressurized air 30). Utilizing swirling patterns of air may also provide preferential cooling to hot zones of the combustion liner 48. By preferentially cooling the hot zones, induced thermal stresses within the turbine combustor 14 may be mitigated, and the reliability of the structure may be improved. Moreover, by preferentially cooling hot zones, the temperature profile of the combustion liner 48 may become more linear, enabling an increase in the combustion reaction firing temperature within the combustion chamber 64. As will be appreciated, this may result in lower costs of operation and lower emissions.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a turbine combustor, comprising:
      a first wall portion disposed about a combustion zone;
      a second wall portion disposed about the first wall portion;
      a plurality of vanes disposed within an annulus between the first and second wall portions, wherein the plurality of vanes is configured to swirl air flowing within the annulus.
2. The system of clause 1, wherein the plurality of vanes is coupled to the first wall portion.
3. The system of clause 1 or clause 2, wherein the plurality of vanes is coupled to the second wall portion.
4. The system of any preceding clause, wherein each of the plurality of vanes is disposed at a respective angle relative to a longitudinal axis of the turbine combustor.
5. The system of any preceding clause, wherein the respective angle is between approximately 0 and 45 degrees or -45 and 0 degrees.
6. The system of any preceding clause, wherein the respective angle is different for at least two of the plurality of vanes.
7. The system of any preceding clause, wherein each of the plurality of vanes have a curved profile.
8. The system of any preceding clause, wherein the plurality of vanes is spaced equilaterally about a circumference of the first wall portion.
9. The system of any preceding clause, comprising a gas turbine engine having the turbine combustor.
10. A system, comprising:
   a plurality of vanes disposed within an annulus between a liner and a flow sleeve of a turbine combustor, wherein the plurality of vanes is disposed about a circumference of the annulus, and each of the plurality of vanes is disposed at a respective angle relative to a longitudinal axis of the turbine combustor.
11. The system of any preceding clause, wherein each of the plurality of vanes is coupled to the liner.
12. The system of any preceding clause, wherein each of the plurality of vanes is coupled to the flow sleeve.
13. The system of any preceding clause, wherein each of the plurality of vanes is disposed in an airflow path downstream of impingement holes formed in the flow sleeve.
14. The system of any preceding clause, wherein at least two of the plurality of vanes are disposed at different respective angles relative to the longitudinal axis of the turbine combustor.
15. The system of any preceding clause, wherein each of the plurality of vanes has a curved profile.
16. The system of any preceding clause, wherein a respective radius of curvature for at least two of the plurality of vanes is different.
17. The system of any preceding clause, comprising the turbine combustor or a gas turbine engine having the plurality of vanes disposed within the annulus between the liner and the flow sleeve.
18. A method, comprising:
   disposing a plurality of vanes within an annulus between a liner and a flow sleeve of a turbine combustor, wherein each of the plurality of vanes is disposed at a respective angle relative to a longitudinal axis of the turbine combustor; and
   flowing an air flow within the annulus and across the plurality of vanes to generate a swirling air flow within the annulus.
19. The method of any preceding clause, comprising coupling the plurality of vanes to the liner of the turbine combustor.
20. The method of any preceding clause, comprising spacing each of the plurality of vanes equilaterally about a circumference of the liner.

## Claims

1. A system, comprising:
a turbine combustor (14), comprising:
a first wall portion (48) disposed about a combustion zone;
a second wall portion (50) disposed about the first wall portion;
a plurality of vanes (52) disposed within an annulus (46) between the first and second wall portions, wherein the plurality of vanes is configured to swirl air flowing within the annulus.

2. The system of claim 1, wherein the plurality of vanes is coupled to the first wall portion.

3. The system of claim 1 or claim 2, wherein the plurality of vanes is coupled to the second wall portion.

4. The system of any preceding claim, wherein each of the plurality of vanes is disposed at a respective angle relative to a longitudinal axis of the turbine combustor.

5. The system of any preceding claim, wherein the respective angle is between approximately 0 and 45 degrees or -45 and 0 degrees.

6. The system of any preceding claim, wherein the respective angle is different for at least two of the plurality of vanes.

7. The system of any preceding claim, wherein each of the plurality of vanes have a curved profile.

8. The system of any preceding claim, wherein the plurality of vanes is spaced equilaterally about a circumference of the first wall portion.

9. The system of any preceding claim, comprising a gas turbine engine having the turbine combustor.

10. A system, comprising:
a plurality of vanes disposed within an annulus between a liner and a flow sleeve of a turbine combustor, wherein the plurality of vanes is disposed about a circumference of the annulus, and each of the plurality of vanes is disposed at a respective angle relative to a longitudinal axis of the turbine combustor.

11. The system of claim 10, wherein each of the plurality of vanes is coupled to the liner.

12. The system of claim 10 or claim 11, wherein each of the plurality of vanes is coupled to the flow sleeve.

13. A method, comprising:
disposing a plurality of vanes within an annulus between a liner and a flow sleeve of a turbine combustor, wherein each of the plurality of vanes is disposed at a respective angle relative to a longitudinal axis of the turbine combustor; and
flowing an air flow within the annulus and across the plurality of vanes to generate a swirling air flow within the annulus.

14. The method of claim 13, comprising coupling the plurality of vanes to the liner of the turbine combustor.

15. The method of claim 13 or claim 14, comprising spacing each of the plurality of vanes equilaterally about a circumference of the liner.
